Europäisches Patentamt

European Patent Office

Office européen des brevets

(19)

(11) Publication number: **0 087 846**

A1

(12) **EUROPEAN PATENT APPLICATION**

(21) Application number: 83200285.1

(22) Date of filing: 25.02.83

(51) Int. Cl.³: **B 60 P 1/64**

(30) Priority: 25.02.82 NL 8200766

(43) Date of publication of application:
07.09.83 Bulletin 83/36

(84) Designated Contracting States:
AT BE CH DE FR GB IT LI LU NL SE

(71) Applicant: N.C.H. HYDRAULISCHE SYSTEMEN B.V.
Toldijk 21
NL-7901 TA Hoogeveen(NL)

(72) Inventor: Nijenhuis, Derk
Toldijk 21
NL-7901 TA Hoogeveen(NL)

(74) Representative: van der Beek, George Frans et al,
Nederlandsch Octrooibureau Johan de Wittlaan 15 P.O.
Box 29720
NL-2502 LS Den Haag(NL)

(54) A device for taking up and putting down containers.

(57) A device for bringing an exchangeable container (18) from a lower level into a vehicle (1) and for putting it down therefrom, having on the vehicle a carriage (6) with lifting means having a hook (15) to engage a protruding part (19) of the container to lift it, and having a stationary hook (16) opening downwardly to enclose the protruding part (19) of the container by both hooks. The hooks may engage the same protruding part (19) in different zones one to the side of the other. There may be further hooks (15, 16) for engaging a protruding part of higher level on the container. The invention allows safe and reliable lifting and lowering with as low as possible horizontal forces for moving them.

fig-1

EP 0 087 846 A1

A device for taking up and putting down containers

This invention relates to a device for bringing an exchangeable container from a lower level onto a vehicle or other carrying device and the reverse, with a carriage movable over the vehicle and carrying a lifting device with jack means for one end of the container, said lifting device having a part movable downwardly to engage an engaging part of a container in a lower position and being movable upwardly to lift the lower edge of the adjacent end of the container to the supporting level for the container on the vehicle or the like.

Such devices are known in different embodiments. More especially such a device is known from the Netherlands patent application 69.18372, in which the vehicle has a bay engageable around an end part of the container, in which the carriage, after lifting the container until its front edge is at some distance above the supporting level on the vehicle or the like, is displaced along the vehicle until the container enters into engagement with rollers on the vehicle or the like in a zone more close to the center of its length, after which the lifting device is lowered in order to tilt the container until its lower surface is entirely on the supporting level for the container. To engage the container, the lifting device is provided with parts slidable sideways towards and away from the container.

The present invention aims at improving such structures and to obtain a simple and reliable device suitable for lifting widely differing types and sizes of containers onto a vehicle also if this has a high supporting surface for the containers, without danger of accidents by loosening of the container from the lifting means, in which moreover the container only has to be lifted with its lower edge to the supporting surface on the vehicle and not higher and in which the engaging part of the lifting device is not subjected to and does not have to transmit high horizontal forces.

In view thereof a device as indicated in the preamble is according to the invention characterized in that the said lifting device has a hook opening upwardly, which when moving upwardly from a lower-most position is adapted to be in carrying engagement with the engaging part of the container, and that the said carriage has a hook opening downwardly or similar locking part, positioned so that it engages from above a protruding part of the container in a position in which said lower edge thereof has been lifted to the supporting level on the vehicle or the like.

In this way it is not necessary to guide the hook opening upwardly in such a way that it is suited to take up high horizontal forces, as the hook opening downwardly or other locking part on the carriage exerts the horizontal forces necessary to bring the container entirely onto the vehicle or the like. Moreover the hook opening downwardly locks the container at the concerning end against upward movements, which avoids accidents, in particular in the part of the path of the container in which its center of gravity is still outside the supporting surface on the vehicle or the like. It is thus possible to suspend the hook opening upwardly easily for instance from a cable or chain, which makes it easy to connect it to the container also if the container and the vehicle are not exactly in one mutual position. But even if the hook opening upwardly is rigidly connected to a part of a jack cylinder, the fact that the downwardly open hook takes over functions as to the transmitting of forces offers the other advantages mentioned, also with respect to a relatively light embodiment in horizontal direction of the movable parts of the device.

Moreover, the suspending of the upwardly opening hook to a flexible pulling member has the advantage that said pulling member may be used in such a way as to give a long distance of lifting for the container with a shorter stroke of the jack means.

On the other hand, the arrangement of the upwardly open hook onto the movable part of a jack cylinder has the advantage that it is easy to engage different types of containers, also if these have their engaging parts for such a hook at mutually different heights. Moreover the situation is more stable when lifting the container if this is applied, and in some respects it is also more safe as to possibility of movements of the container during lifting.

The invention will now be explained by way of example with reference to the attached drawings. Therein:

Fig. 1 is a somewhat diagrammatic sideview of a device according to the invention in a first embodiment;

Fig. 2 is a sideview of the same device in an other position;

Fig. 3 is a perspective view of part of a container with engaging parts according to the invention;

Fig. 4 is a sideview of a carriage for such a device, but in an other embodiment; and

Fig. 5 is a section and view along the line V - V in Fig. 4.

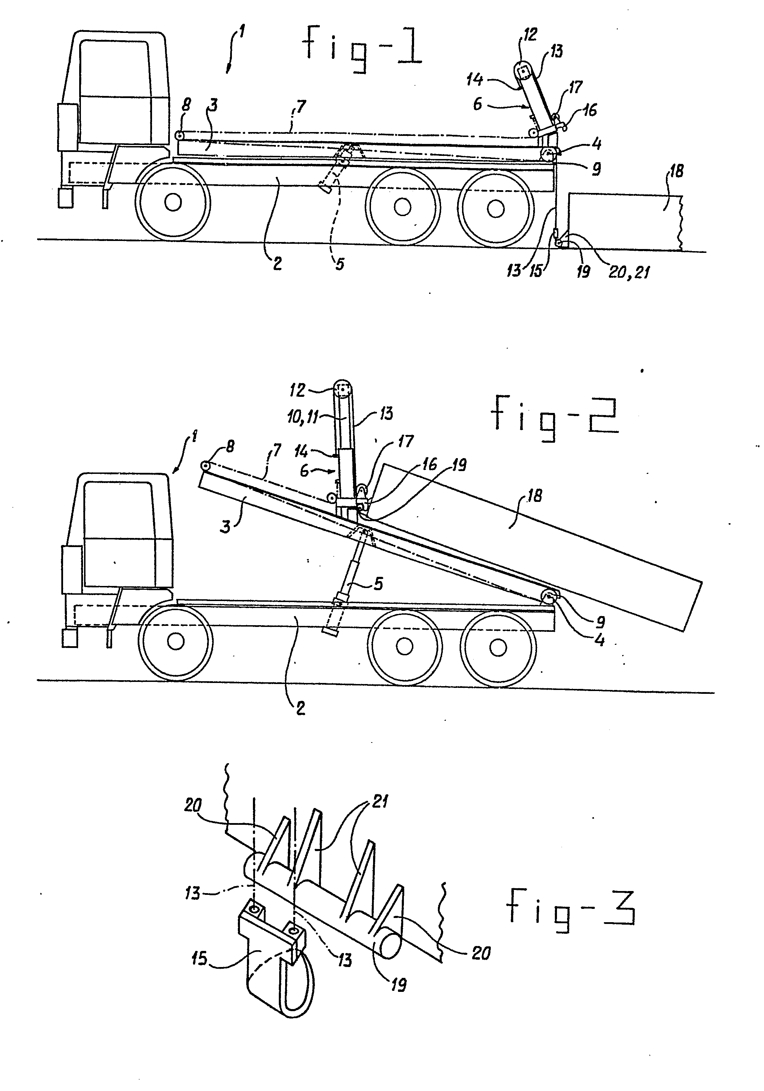

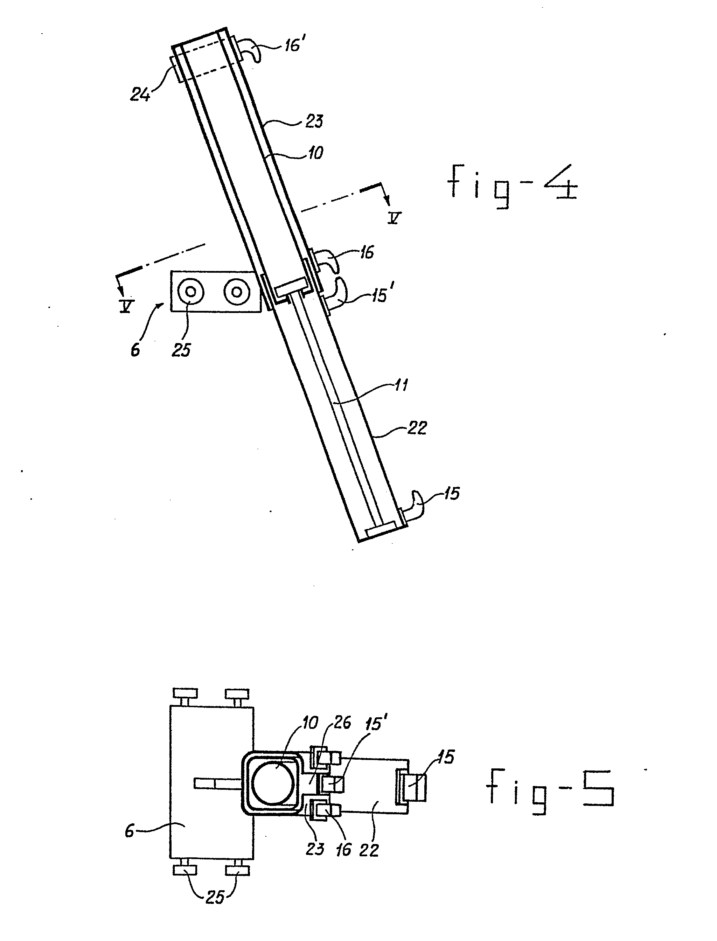

The vehicle 1 of Figs. 1 and 2 has a vehicle frame 2 and thereon a loading frame 3 connected thereto through a horizontal pivot axis at the back end of the vehicle at 4 and movable about said pivots by a jack cylinder 5. On said loading frame 3 a carriage 6 is provided, to which both ends of a cable or chain 7 are connected, which cable or chain is guided over rollers 8 and 9 on the loading frame. The carriage is guided by running rollers or slide-pieces in beams of the loading frame 3 acting as guide tracks for this carriage. The running rollers or slide-pieces have not been shown here, but such rollers are indicated by 25 in Fig. 4 and 5. By drive means not shown for cable or chain 7, e.g. driving roller 8 or roller 9, the carriage is movable over the loading frame from front to back thereof and the reverse.

The carriage 6 has an upstanding hydraulic double acting jack cylinder 10 with piston or plunger rod or sleeve slidable into and out of said cylinder and may have a sheath or tube, e.g. of square or rectangular cross section, surrounding such rod, such movable part or parts being indicated by 11 and carrying to rollers 12 at their top. A cable or chain 13 is guided over each of said rollers, is connected rigidly to the casing of the jack cylinder 10 at 14 and is provided at its other end with a hook 15 opening upwardly (Fig. 3). Moreover the carriage has two rigid downwardly open hooks 16, horizontally at a distance one to the side of the other and rigidly connected near the lower end of the casing of the jack cylinder 10. A roller 17 guides the cables or chains 13 between itself and the casing of said cylinder.

A container 18 is shown in part in Fig. 1 as standing on the earth behind the vehicle and in Fig. 2 in a position partly lifted onto the vehicle. This container is provided at the side where it is engaged by parts of the vehicle with a horizontal shaft 19 welded to brackets 20 near the outer ends and 21 at a distance to the inside thereof to the container.

The jack cylinder 10 is in a position somewhat inclined with respect to the loading frame 3, e.g. at an angle of about 80$^{o}$ thereto or somewhat less.

In the embodiment of Figs. 4 and 5 a double acting jack cylinder 10 is shown having its moving part 11 protruding downwardly and rigidly connected to the remainder of the carriage 6 also in a somewhat inclined position. The upwardly open hook 15 is provided near the lower end of a casing or sheath 22 moving up and down with the movable part 11 and being guided during such movements between the cylinder 10 and a fixed casing or sheath 23. In the lower most position of parts 11 and 22 the hook is in a lower position than the shaft 19 on a container (Fig. 4), so that, by shortening the jack cylinder, it is able to tilt the container at the adjacent end until said shaft reaches the two downwardly open hooks 16, positioned at a horizontal distance one to the side of the other, so that in said position this shaft 19 is adequately enclosed all around before the carriage pulls the container onto the vehicle.

Some containers have an engaging part such as a lug, ear or eye at a much higher position than the engaging parts shown in Fig. 3. For lifting such containers there may be a second upwardly open hook 15' connected to the movable sheath 22. To allow movement thereof to the corresponding high position on the carriage a longitudinal slot 26 is made in the rigid casing or sheath 23, so that the hook 15' is adapted to cooperate with two open hooks 16' opening downwardly provided near the top of said casing or sheath one to the side of the other. Such hooks 16' may be provided on a clip or strap 24 engaging slidably around a fixed sheath or casing 23 so as to be moved up and down along it and having means not shown to be rigidly connected thereto at the desired height depending on the height of the concerning engaging part on the container to be lifted. If desired the hook 15' may also be slidably displaceable on the sheath 22 and securable thereto at any desired height depending on the embodiment of the concerning container.

The hooks 16 are horizontally so far apart that they allow in this case the hook 15' to pass between them upwardly and downwardly.

The somewhat inclined position of the jack cylinder with respect to the loading frame 3 has the advantage that, when taking up and putting down containers there is no harm in an unlevel position of the vehicle with respect to the container e.g. by uneven earth surface, e.g. if the front of the vehicle or the back of the container are in a higher position than the other end thereof and there is neither danger of the upper edge of the container, which often protrudes therefrom, to hit parts of the vehicle, the carriage and the jack structure, and this also makes it easy to begin raising the loading frame 3 into an inclined position as in Fig. 2 before the lifting of the front edge of the container is completed.

It is preferred in this structure to put the loading bridge 3 first of all into such an inclined position when taking up a container that the jack cylinder 10, having a rigid angular position with respect to the loading frame 3, is in a substantially vertical position. In this position the horizontal forces are at their lowest level. Then, as soon as the container is in a position in which its lower edge is at the height of the back edge of the loading frame 3, this frame is inclined further until it reaches about the same angular position as the container. It is then possible to pull the container onto the loading frame while it moves only linearly, also after it is no more in contact with the earth, by moving the carriage forwardly and upwardly along the

6  0087846

loading frame, the enclosing of the shaft 19 on the container between the hooks 15 and 16 making this easily and safely possible. During this movement of pulling the container onto the loading frame, this loading frame may be lowered by jack cylinder 5.

With the structure of Figs. 1 to 3 having chains or cables 13 it is possible for an operating person to displace the hook 15 in its lower position somewhat by hand or foot to hook it onto the shaft 19 on the container and in the embodiment of Figs. 4 and 5 the vehicle should be positioned somewhat more accurately with respect to the container.

---

Claims.....

CLAIMS

1. A device for bringing an exchangeable container (18) from a lower level onto a vehicle (1) or other carrying device and the reverse, with a carriage (6) movable over the vehicle and carrying a lifting device (10, 11, 13) with jack means for one end of the container, said lifting device having a part (13, 15) movable downwardly to engage an engaging part (19) of a container in a lower position and being movable upwardly to lift the lower edge of the adjacent end of the container to the supporting level for the container on the vehicle or the like, characterized in that the said lifting device has a hook (15) opening upwardly, which when moving upwardly from a lower-most position is adapted to be in carrying engagement with the engaging part (19) of the container, and that the said carriage (6) has a hook (16) opening downwardly or similar locking part, positioned so that it engages from above a protruding part (19) of the container in a position in which said lower edge thereof has been lifted to the supporting level on the vehicle or the like.

2. A device according to claim 1, in which one of said hooks (15, 16) or the like comprises two hooks (16), so that one hook (15) on one part (lifting device or carriage) is adapted to engage between the two hooks (16) on the other of said parts, so that the hooks together engage in a stable manner onto different engaging parts or different zones of a protruding engaging part (19) of a container.

3. A device according to claim 2, characterized in that the engaging means on the container comprise a horizontally extending shaft (19), onto which one hook (15) engages near the centre and the said two hooks (16) engage to both sides of said one hook.

4. A device according to any of the preceding claims, in which the hook (15) opening upwardly is connected to a flexible pulling member (13), suspended downwardly from the part (11) of the lifting device movable up and down.

5. A device according to claim 4, in which the flexible pulling member (13) is guided, as seen from said hook (15) opening upwardly, over a reversing guide (12) on the part (11) of the jack means movable up and down and is connected at its other end to a fixed point (14) on the carriage (6).

6. A device according to any of claims 1, 2 or 3, in which the part (11, 22) of the jack means movable up and down itself carries the said hook (15) opening upwardly in a point below the stationary structure (10) of the jack means on the carriage (6).

7. A device according to any of claims 1, 2 or 6, in which the part (11) of the jack means movable up and down carries the hook (15) opening upwardly in a point which at least in a part of the stroke of said movable part of the jack means is positioned horizontally at the same level as and to the side of the stationary structure (10, 23) of the jack means.

8. A device according to claim 7, in which said hook (15) is movable up and down through a slot (26) in said stationary structure (10, 23) of the jack means.

9. A device according to any of the preceding claims, in which two hooks (15, 15') opening upwardly are positioned at a mutual vertical distance and are connected to the movable part (11, 22) of the jack means so as both to move up and down by the jack means, there being also two hooks (16, 16') opening downwardly, connected at different heights to the stationary structure (10, 23) of the jack means.

10. A device according to any of the preceding claims, in which a hook (16') is displaceable up and down along and with respect to the jack means, there being means to fasten it thereto in different positions.

11. A device according to any of the preceding claims, in which the jack means (10, 11) take up an inclined position with respect to the track (on 3), along which the carriage (6) is movable, so as to be farther away from the container (18) in its higher parts.

12. A device according to claim 11, with a loading frame (3) with a track for the carriage, said frame being tiltable about a horizontal axis (9) on the vehicle or the like.

13. A vehicle for carrying exchangeable containers, which is provided with a device according to any of the preceding claims.

14. A vehicle with a loading frame according to claim 13, said frame (3) being connected to the vehicle pivotably about a horizontal axis (9) at the end of the vehicle where the containers are moved onto them.

15. A container, provided with an engaging part (19) for cooperation with a hook (15) and with a further device according to any of the preceding claims.

16. A container according to claim 15 for cooperation with a device according to claim 3, said container having a horizontally extending shaft (19) protruding therefrom for engagement of both said hooks (15, 16) thereon one to the side of the other.

=============

fig-1

fig-2

fig-3

0087846

fig-4

fig-5

European Patent
Office

**EUROPEAN SEARCH REPORT**

**0087846**
Application number

EP  83 20 0285

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-2 065 063 (NATIONAL RESEARCH) <br> * Whole document * | 1 | B 60 P  1/64 |
| A | DE-C- 849 376 (FRÜHWALD & JÄGER) <br> * Whole document * | 1 | |
| A | FR-A-2 221 303 (LIHNEL VAGN AB.) <br> * Whole document * | 1 | |
| A | FR-A-2 155 043 (DECAUVILLE) <br> * Whole document * | 1 | |
| | | | **TECHNICAL FIELDS SEARCHED (Int. Cl. ³)** |
| | | | B 60 P |

The present search report has been drawn up for all claims

| Place of search | Date of completion of the search | Examiner |
|---|---|---|
| THE HAGUE | 15-06-1983 | HEROUAN E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82